(19) Europäisches Patentamt
European Patent Office
Office européen des brevets

(11) Publication number: **0 376 910 A1**

(12) # EUROPEAN PATENT APPLICATION

(21) Application number: **89870209.7**

(22) Date of filing: **21.12.89**

(51) Int. Cl.$^{5}$: **A01N 57/12, A01N 41/06, A01N 25/10**

(30) Priority: **27.12.88 US 290332**

(43) Date of publication of application: **04.07.90 Bulletin 90/27**

(84) Designated Contracting States: **GR**

(71) Applicant: **MONSANTO COMPANY**
**800 North Lindbergh Boulevard**
**St. Louis Missouri 63167(US)**

(72) Inventor: **Wright, Daniel Richard**
**7005 Southland**
**St.Louis Missouri 63109(US)**

(74) Representative: **Lunt, John Cooper et al**
**Monsanto Services International S.A. Patent Department Avenue de Tervuren 270/272**
**L.Box 21**
**B-1150 Brussels(BE)**

(54) **Compositions containing a mixture of herbicides.**

(57) A herbicidal aqueous composition comprising a mixture of a sulfanilamide herbicide and N-phosphonomethylglycine herbicide is provided. A thickening agent is included in the composition to thicken the composition sufficiently that the composition passes through the measurement surface of a Ford B2 Cup at a rate of 100 ml of composition in about 25-125 seconds.

EP 0 376 910 A1

# COMPOSITIONS CONTAINING A MIXTURE OF HERBICIDES

## Background of the Invention

### A. Field of the Invention

This invention relates to a herbicidal composition suitable for being applied to plants by rotary spraying. More particularly, this invention relates to an aqueous composition containing a mixture of herbicides suitable for being applied to plants by rotary spraying.

### B. Prior Art

Certain sulfanilamides are known selective preemergence herbicides effective against many weeds. One such sulfanilamide which has the common name of oryzalin is 4-(dipropylamino)-3,5-dinitrobenzenesulfonamide.

N-phosphonomethylglycineis a known, very broad spectrum, relatively nonselective herbicide and has the common name of glyphosate. Glyphosate is conventionally applied as an aqueous composition of a more water soluble salt form thereof. Commercially available formulations of glyphosate contain glyphosate in the form of its isopropylamine salt in aqueous solution. Recently it has become known to apply spray solutions containing a herbicide by centrifugation. This is accomplished by feeding a spray mixture to a device equipped with a distribution element that rotatably discharges the herbicide in a controlled manner onto a defined area of plants. British Patent Specification No. 2,131,327 disclosed spray equipment useful for rotatary dispensation of herbicides.

Difficulties are encountered in obtaining a uniform spray when known spray mixtures of glyphosate and sulfanilamide herbicides are employed using a device designed to discharge a herbicidal mixture from a distribution element by centrifugal force. The present invention provides a composition of glyphosate and sulfanilamide herbicides suitable for being applied directly by centrifugation.

## Summary of the Invention

The present invention provides a composition which is suitable for being directly applied to plants or to the ground and is especially suitable for rotary deposition. The composition is an aqueous composition containing a mixture of herbicides. It is preferred that one herbicide is glyphosate and the other herbicide is a sulfanilamide herbicide, more preferably oryzalin. The composition contains water in an amount sufficient to form an aqueous solution or aqueous suspension of the herbicides. A thickening agent, such as a xanthan gum or water soluble polyacrylic acid, is included in the formulation in an amount sufficient to provide the desired viscosity required for rotary spraying. The formulation may also contain magnesium aluminum silicate as an anticaking and resuspension aid. Other adjuvants may be present in the composition. For example, it is often preferred that a biocide be included in the composition to minimize the buildup of microorganisms. In order to prevent freezing of the composition, an antifreeze agent, such as propylene glycol, may be incorporated in the composition. The incorporation of an antifoam agent is often useful to prevent foaming at high sheer rates.

## Description of the Invention

Preferably, the composition contains about 5-25 percent by weight of the sulfanilamide herbicide and about 1-16 percent by weight of the glyphosate herbicide. More preferably the sulfanilamide herbicide is present in the composition in an amount of about 8-20 percent by weight and glyphosate is present in the composition in an amount of about 2-12 percent by weight. Water is present in the composition in an amount of about 40-90 percent by weight, more preferably about 50-85 percent by weight.

The sulfanilamide herbicide useful in the compositions of the present invention includes:

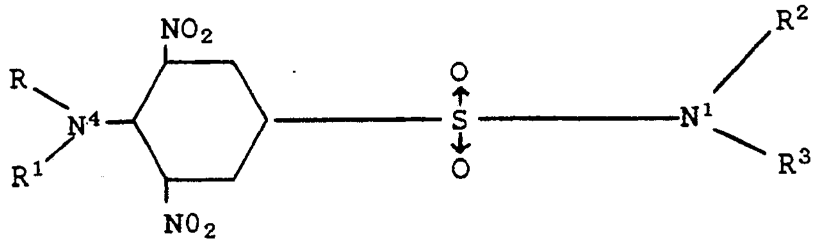

wherein R, when taken separately, is hydrogen, $C_3$-$C_4$ alkenyl, or $C_3$-$C_6$ alkyl;
$R^1$, when taken separately, is $C_3$-$C_4$ alkenyl, or $C_3$-$C_6$ alkyl;
R and $R^1$, when neither is hydrogen, contain a total of from 4 to 8 carbons;
R and $R^1$, when taken together with the nitrogen atom to which they are attached, form a pyrrolidino, piperidino, or morpholino ring;
$R_2$ and $R_3$, when taken together with the nitrogen atom to which they are attached, form a pyrrolidino or aziridino ring,
$R^2$ and $R^3$, when taken separately are the same or different and are hydrogen, $C_1$-$C_5$ alkyl, allyl, phenyl, or $C_3$-$C_5$ cycloalkyl; when R is hydrogen, R contains less than 7 carbons; and $R^2$ and $R^3$, when neither is hydrogen, contain a total of not more than 4 carbon atoms.

N-phosphonomethylglycine useful in the composition has the structural formula:

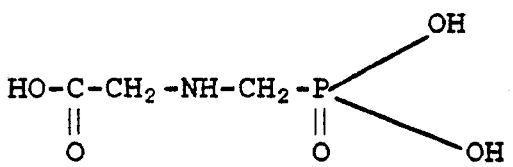

In view of its limited solubility of water N-phosphonomethylglycine is usually formulated in the form of a water soluble herbicidally acceptable salt.

Preferably, the composition contains a polymeric thickening agent that is soluble in the formulation. Such substance is employed to control the viscosity of the formulation. The preferred thickening agent is xanthan gum which is a high molecular weight natural carbohydrate, or more specifically, polysaccharide. Xanthan gum defines the exocellular biopolysaccharide which is produced in a pure culture fermentation process by the microorganism Xanthomonas campestus. The thickener level can range from about 0.01 - 2 percent by weight of the formulation.

The formulations of the present invention may also contain a polyoxyalkylamine for potentiation of the herbicidal activity of glyphosate. The amount of polyoxyalkylamine can range from about 0.1 to 8 percent on a weight basis of the composition.

The formulations of the present invention may also contain 0.1-4 percent by weight magnesium aluminum silicate suspension aid and 0.05-1% by weight of a wetting agent, such as naphthalene sulfonate. Often it is desirable for the formulation to contain a biocide in an amount of 0.001-0.20 by weight to control the growth of microorganisms.

The formulations of the present invention may contain a silicone antifoam to control the foaming of the formulation. The amount of antifoam agent can range from 0.1-2.0 percent on a weight basis of the composition.

In formulating the composition of the present invention, the ingredients and amounts thereof are selected and combine in such a way as to create a formulation that has an optimum stability and viscosity such that the formulations, will spray suitably through and from a rotary spray device in such a manner that controlled droplet size is achieved, and the flow rate through the lance is such that the optimum amount of the product is delivered to the target plants.

The viscosity of the composition is characterized by having a flowability at 25° C such that the time elapsed from 100 ml of the composition to pass through a measurement orifice of a Ford B2 Cup is in the range of from about 25-150 seconds.

The practice of the invention will be further illustrated by means of the following example, wherein, unless otherwise indicated, all parts or percentages are given on a weight basis.

## EXAMPLE

The following formulation was prepared by placing the weighed ingredients and blending the resulting mixture in a blender. Thereafter, the blended mixture was milled by a wet milling process using a milling device.

| Composition | |
|---|---|
| Ingredient | % |
| Glyphosate Comp. | 27.67 |
| Oryzalin | 13.30 |
| Water | 46.57 |
| Rhodopol 50 MC | 0.15 |
| Antifoam | 0.10 |
| VEEGUM | 2.00 |
| MORWET EFW | 0.50 |
| PROXEL GXL | 0.01 |

Glyphosate composition contained 30.4% N-phosphonomethylglycine on an acid equivalency basis and the remainder water. Oryzalin contained 96.5% active ingredient. Rhodopol 50 MC is a xanthan gum thickener. The antifoam was a silicone defoamer. VEEGUM is magnesium aluminum silicate suspension aid. MORWET EFW is a common wetting agent and chemically is naphthalene sulfonate. Proxel GXL is an antimicrobial agent.

The resulting formulation has a Ford Cup value of 125 seconds. The Composition was delivered to a target area using the rotary spray device disclosed in British Patent Specification No. 2,131,327. The spray pattern was even and of excellent droplet size.

The above disclosure shows that the compositions of the present invention can be used to dispense and rotatably a mixture comprising a polar herbicide and a nonpolar herbicide.

The formulation of the present invention is stable chemically and physically. It may be sprayed directly onto plants without dilution or further mixing. The formulation has flowability for direct feed to a rotary spray device such that the flow is fast enough for a good spray pattern but slow enough to cover the target area with active herbicide. The droplet size of the spray is small enough to sufficiently cover the target area with a good spray swath.

It is to be understood that the detailed description of the present invention including the above example are given merely by way of illustration and that many modifications may be made therein without departing from the spirit or scope of the present invention.

## Claims

1. A herbicidal aqueous composition comprising

a) a herbicidally effective amount of a sulfanilamide herbicide;

b) a herbicidally effective amount of N-phosphonomethylglycine;

c) water in an amount sufficient to dissolve the N-phosphonomethyl glycine and to suspend the sulfanilamide herbicide;

d) a polymeric thickening agent in an amount sufficient to thicken the composition such that at 25° C the time elapsed for 100 ml of the composition to pass through the measurement orifice of a Ford B2 Cup is in the range of about 20-150 seconds.

2. The composition of Claim 1 wherein the sulfanilamide herbicide is oryzalin.

3. The composition of Claim 2 wherein the thickening agent is xanthan gum.

4. The composition of Claim 2 wherein the resuspension aid is added.

5. The composition of Claim 3 wherein the resuspension aid is magnesium aluminum silicate.

6. The composition of Claim 2 wherein a biocide is added to prevent bacterial growth therein.

7. The composition of Claim 2 wherein an antifoam agent is added.

8. The composition of Claim 2 wherein an antifreeze agent is added to prevent separation and inversion

of the emulsion at cold temperatures.

9. A herbicidal emulsion composition position comprising.

a) oryzalin in the amount of about 5-25 percent by weight;

b) N-phosphenomethyglycine or a soluble herbicidally acceptable salt thereof in the amount of about 1-16 percent by weight;

c) water in the amount of about 40-90 percent by weight;

d) xanthan gum in the amount of about 0.01 to 2 percent by weight; and

e) magnesium aluminum stearate in the amount of 0.1-4 percent by weight.

10. The composition of Claim 9 wherein a biocide is added to prevent bacterial growth therein.

11. The composition of Claim 9 wherein an antifoam agent is added.

12. The composition of Claim 9 wherein an antifreeze agent is added to prevent separation an inversion of the emulsion at cold temperatures.

European Patent Office

# EUROPEAN SEARCH REPORT

Application number

EP 89870209.7

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| A | US - A - 3 799 758 (J.E. FRANZ) * Abstract * -- | 1,9 | A 01 N 57/12<br>A 01 N 41/06<br>A 01 N 25/10 |
| A | AT - B - 342 918 (AMERICAN CYANAMID COMPANY) * Claims * -- | 1,9 | |
| A | US - A - 3 367 949 (QU.F. SOPER) * Totality * ---- | 1,2,9 | |
| | | | TECHNICAL FIELDS SEARCHED (Int Cl.5) |
| | | | A 01 N |

The present search report has been drawn up for all claims

| Place of search | Date of completion of the search | Examiner |
|---|---|---|
| VIENNA | 27-02-1990 | SCHNASS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document